# EUROPÄISCHE PATENTSCHRIFT

(11) **EP 0 897 196 B1**
(45) Veröffentlichungstag und Bekanntmachung des Hinweises auf die Patenterteilung: **21.11.2001**
(21) Anmeldenummer: 97114006.6
(22) Anmeldetag: 13.08.1997
(51) Int. Cl.: H01M 8/02, C04B 35/622, C04B 35/443

(54) **Verfahren zum Herstellen einer isolierenden Komponente für eine Hochtemperatur-Brennstoffzelle und Hochtemperatur-Brennstoffzelle**
Method of manufacturing an insulating component for a high-temperature fuel-cell and high-temperature fuel-cell
Procédé de fabrication d'un composant isolant pour une pile combustible fonctionnant à haute température et pile à combustible

(43) Veröffentlichungstag der Anmeldung: 17.02.1999
(73) Patentinhaber: SIEMENS AKTIENGESELLSCHAFT, 80333 München (DE)
(72) Erfinder: Greiner, Horst, 91301 Forchheim (DE); Kempter, Karl, 81477 München (DE)

(56) Entgegenhaltungen:
- WO-A-94/07808
- DE-A- 4 224 906
- DE-C- 19 608 727

## Beschreibung

Die Erfindung bezieht sich auf ein Verfahren zum Herstellen einer isolierenden Komponente für eine Hochtemperatur-Brennstoffzelle und auf eine Hochtemperatur-Brennstoffzelle.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom mit hohem Wirkungsgrad und, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Für eine teilweise elektrische Isolation benachbarter Verbundleiterplatten gegeneinander (in Bereichen, wo keine Elektrolyt-Elektroden-Einheit zwischen benachbarten Verbundleiterplatten vorgesehen ist, müssen die Verbundleiterplatten gegeneinander elektrisch isoliert sein) ist eine isolierende Komponente vorgesehen, welche die Form eines Rahmens aufweist. In der isolierenden Komponente sind Durchführungen für gasförmige Betriebsmittel für die Elektrolyt-Elektroden-Einheit vorgesehen. Benachbarte Durchführungen (die unterschiedliche Betriebsmittel führen) müssen gasdicht gegeneinander isoliert sein. Außerdem muß die isolierende Komponente gewährleisten, daß kein Betriebsmittel in den Außenraum der Hochtemperatur-Brennstoffzelle, d.h. beispielsweise in die Umwelt, gelangt. Der Werkstoff der isolierenden Komponente muß somit gasundurchlässig sein und darf zugleich keine elektrische Leitfähigkeit aufweisen.

Die Herstellung einer solchen isolierenden Komponente für eine Hochtemperatur-Brennstoffzelle erweist sich als sehr aufwendig. Bei einem aus dem Stand der Technik bekannten Herstellungsverfahren wird die isolierenden Komponente unmittelbar auf die Verbundleiterplatte aufgetragen (d.h. daß die zusammenzufügenden Bauelemente, hier die Verbundleiterplatten, unmittelbar am Herstellungsprozeß beteiligt sind). Die Zusammensetzung in der Oberfläche der Verbundleiterplatte wird wenigstens kurzfristig teilweise verändert. Außerdem kann es während des Herstellungsprozesses zu mechanischen Beschädigungen auf der Oberfläche der Verbundleiterplatte kommen.

In einem weiteren aus dem Stand der Technik bekannten Verfahren zum Herstellen der isolierenden Komponente (die isolierende Komponente besteht meistens aus einem keramischen Werkstoff) wird die isolierende Komponente durch die Anwendung von keramischen Fertigungstechniken (wie z.B. Pressen und Sintern von Platten, Einstellen der Wandstärken der Komponente durch Schleifen, Strukturieren mit einem Laser, usw.) hergestellt. Bei diesem Verfahren wird erheblich mehr Werkstoff zum Verarbeiten verwendet, als letztendlich für die fertige isolierende Komponente benötigt wird. Beide Verfahren erweisen sich als sehr aufwendig und kostenintensiv.

Der Erfindung liegt nun die Aufgabe zugrunde, ein einfaches und kostengünstiges Verfahren zum Herstellen einer isolierenden Komponente aus einem keramischen Werkstoff für eine Hochtemperatur-Brennstoffzelle anzugeben.

Gemäß der Erfindung umfaßt ein Verfahren zum Herstellen einer isolierenden Komponente aus einem keramischen Werkstoff für eine Hochtemperatur-Brennstoffzelle mehrere Schritte: In einem ersten Schritt (A) wird ein keramischer Werkstoff durch Naßaufbereiten mit einem wasserlöslichen Binder in eine Dispersion umgesetzt. Anschließend wird in einem zweiten Schritt (B) die Dispersion zu einer wasserhaltigen Schicht vergossen. In einem dritten Schritt (C) wird diese bei erhöhter Temperatur zu einer gummiartigen Schicht umgesetzt. Anschließend wird in einem vierten Schritt (D) der Binder bei erhöhter Temperatur aus der gummiartigen Schicht ausgebrannt. In einem fünften Schritt (E) wird die ausgebrannte (also praktisch binderfreie) Schicht bei erhöhter Temperatur verfestigt um dann in einem sechsten Schritt (F) und einem siebten Schritt (G) zur isolierenden Komponente verarbeitet zu werden. Dabei wird die isolierende Komponente dichtgesintert und auf die Endabmessungen gebracht, wobei das Dichtsintern den siebten Schritt (G) darstellen kann, falls eine Volumenänderung, die während des Dichtsinterns auftritt, vernachlässigbar ist oder bereits bei der Formgebung vor dem Calcinieren ausreichend berücksichtigt wird..

Beim Verfahren wird die Dispersion ("Dispersion" ist die Bezeichnung für ein System aus mehreren Phasen, von denen eine kontinuierlich und mindestens eine weitere fein verteilt ist) aus dem keramischen Werkstoff und aus dem wasserlöslichen Binder zu einer wässerigen Schicht vergossen. Dabei kann die Menge an Dispersion (auch Schlicker genannt) bereits so proportioniert werden, daß sie in etwa der benötigten Menge für die isolierende Komponente entspricht. Beim Verfahren entstehen somit keine unnötigen Werkstoffkosten. Bereits vor dem Bearbeiten der Schicht im sechsten Schritt (F) auf die endgültige geometrische Form der isolierenden Komponente wird die Schicht im fünften Schritt (E) bei erhöhter Temperatur verfestigt. Dadurch ist gewährleistet, daß nach dem Bearbeiten der isolierenden Komponente, beispielsweise mit mechanischen Mitteln oder mit einem Laser, diese nur noch wenig (in vorhersehbarer Weise) schrumpft. Somit weist die isolierende Komponente nach der Dichtsinterung im siebenten Schritt (G) die gewünschten geometrischen Dimmensionen für den Einsatz in der Hochtemperatur-Brennstoffzelle auf. Im Verfahren können alle möglichen keramischen Werkstoffe verarbeitet werden, solange sie die gewünschten isolierenden Eigenschaften aufweisen. Das Verfahren erweist sich somit als einfach durchzuführen, wodurch zugleich die Kosten des gesamten Herstellungsverfahrens reduziert werden.

Vorzugsweise weist die wasserhaltige Schicht eine Dicke d zwischen 500 und 800 µm auf. Mit diesem Verfahren werden Schichtdicken für die isolierende Komponente erreicht, die für den Einsatz in der Hochtemperatur-Brennstoffzelle geeignet sind. Um bestimmten mechanischen Anforderungen zu genügen (wie beispielsweise eine Belastbarkeit unter mechanischen Spannungen), können mehrere isolierende Komponenten (die dann jeweils eine Dicke d von unterhalb 500 µm aufweisen) unmittelbar über- oder untereinander in der Hochtemperatur-Brennstoffzelle eingesetzt werden.

Die Dispersion kann dabei in einer Form vergossen werden, in der sie auch noch erhitzt werden kann, um während des weiteren Verfahrensablaufs die gummiartige Schicht oder die ausgebrannte bzw. verfestigte Schicht zu bilden. Wenn die Gußform bereits (unter Berücksichtigung von Volumenänderungen des Materials während der weiteren Verfahrensschritte) ungefähr den Abmessungen der fertigen Komponente entspricht, wird ein Halbzeug erhalten, das später nur noch geringfügig nachbearbeitet werden muß, um die Endabmessungen der isolierenden Komponente zu erreichen.

Insbesondere kann die Umsetzung im dritten Schritt (C) bei einer Temperatur T₁ zwischen 80 und 140 °C für eine Zeitdauer t₁ zwischen 2 und 10 Stunden durchgeführt werden.

In einer weiteren Ausgestaltung wird im vierten Schritt (D) der Binder bei einer Temperatur T₂ zwischen 200 und 600 °C ausgebrannt, wobei für diesen Schritt eine Zeitdauer t₂ zwischen 1 und 4 Stunden veranschlagt wird. Die angegebenen Temperaturen und Zeitdauern haben sich in der Praxis bewährt.

Vorzugsweise wird die Verfestigung im fünften Schritt (E) bei einer Temperatur T₃ zwischen 1400 und 1600 °C für eine Zeitdauer t₃ von höchstens 60 Stunden durchgeführt.

Insbesondere kann die Dichtsinterung im sechsten oder siebenten Schritt (F,G) bei einer Temperatur T₄ zwischen 1500 und 1800 °C für eine Zeitdauer t₄ von höchstens 60 Stunden erfolgen. Die Dichtsinterung sollte bei einer höheren Temperatur als die Verfestigung durchgeführt werden.

Gemäß der Erfindung enthält eine Hochtemperatur-Brennstoffzelle wenigstens eine nach diesem Verfahren hergestellte isolierende Komponente.

Weitere vorteilhafte Ausgestaltungen sind in den Unteransprüchen wiedergegeben.

Zum besseren Verständnis der Erfindung und ihrer Weiterbildungen werden mehrere Ausführungsbeispiele anhand zweier Figuren erläutert. Es zeigen:
- FIG 1: die Abfolge eines Verfahrensbeispiels der Erfindung zum Herstellen einer isolierenden Komponente aus einem keramischen Werkstoff für eine Hochtemperatur-Brennstoffzelle in schematischer Darstellung und
- FIG 2: einen Ausschnitt aus einer Hochtemperatur-Brennstoffzelle in schematischer Darstellung.

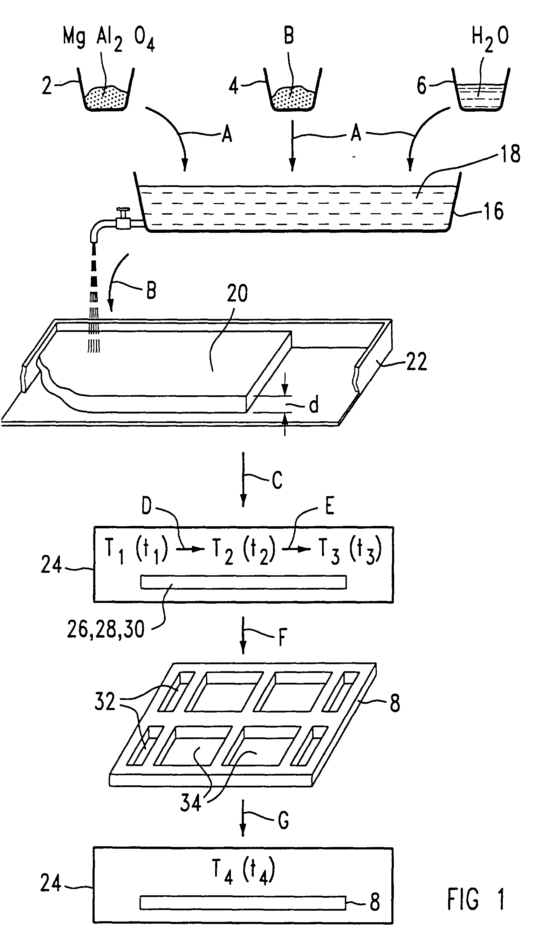

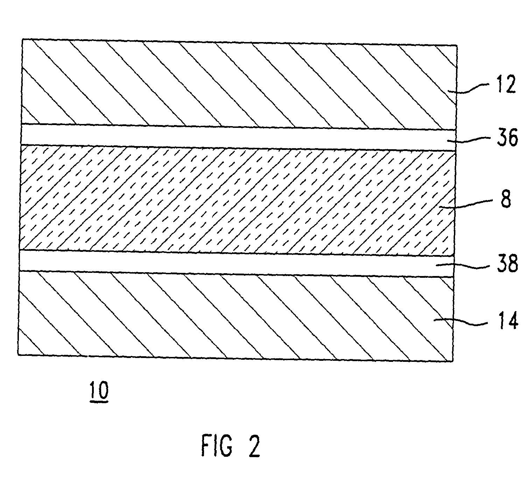

In FIG 1 erkennt man drei Vorratsbehälter 2 bis 6. Im Vorratsbehälter 2 befindet sich Magnesiumaluminat (MgAl₂O₄) ("Magnesiumaluminat" wird auch als Spinell bezeichnet und besitzt eine oktaedrische Kristallstruktur). Das Spinell ist als keramischer Werkstoff für eine isolierende Komponente 8 in einer Hochtemperatur-Brennstoffzelle 10 (siehe FIG 2) geeignet, wenn die zusammenzufügenden Verbundleiterplatten 12,14 der Hochtemperatur-Brennstoffzelle 10 aus einer Chrombasislegierung bestehen (unter einer Chrombasislegierung versteht man eine Legierung die als Hauptbestandteil Chrom (Cr) enthält). Der Vorratsbehälter 4 enthält ein wasserlösliches Bindemittel und der Vorratsbehälter 6 Wasser (H₂O) zum Erzeugen einer Dispersion.

In einem ersten Schritt A werden etwa 90 Gew.-% des Spinelles aus dem Vorratsbehälter 2 und etwa 10 Gew.-% des Bindemittels aus dem Vorratsbehälter 4 unter Zugabe von Wasser (H₂O) aus dem Vorratsbehälter 6 portionsweise in einem Gefäß 16 zu einer Dispersion 18 umgesetzt.

Anschließend wird in einem zweiten Schritt B die Dispersion 18 (auch Schlicker genannt) zu einer wasserhaltigen Schicht 20 auf einer geeigneten formartigen Unterlage 22 vergossen. Die wässerige Schicht 18 weist eine Dicke d zwischen 500 und 800 µm auf. Um eine angenähert konstante Dicke d der Schicht 20 zu gewährleisten, kann diese durch mechanische Bearbeitung (beispielsweise mit einem Messer) geglättet werden.

Die wasserhaltige Schicht 20 wird in einem dritten Schritt C bei einer Temperatur T₁ zwischen 80 und 140 °C in einem Ofen 24 für eine Zeitdauer t₁ zwischen 2 und 10 Stunden zu einer gummiartigen Schicht 24 (welche häufig auch als Grünfolie bezeichnet wird) umgesetzt.

In einem vierten Schritt D wird das Bindemittel im Ofen 24 bei einer Temperatur T₂ zwischen 200 und 600 °C für eine Zeitdauer t₂ zwischen 1 und 4 Stunden ausgebrannt. Man erhält eine bindemittelfreie Schicht 28.

Anschließend wird die bindemittelfreie Schicht 28 in einem fünften Schritt E ebenfalls im Ofen 24 bei einer Temperatur T₃ zwischen 1400 und 1600 °C für eine Zeitdauer t₃ von höchstens 60 Stunden zu einer verfestigten Schicht 30 (der Zustand der verfestigten Schicht 30 wird auch als Weißkeramik bezeichnet) umgesetzt. Die verfestigte Schicht 30 weist bereits eine Porosität von weniger als 20 % auf. Sie weist den idealen Zustand für eine formgebende Bearbeitung auf.

In einem sechsten Schritt F wird nun die verfestigte Schicht 30 zur isolierenden Komponente 8 verarbeitet. Mit anderen Worten wird die verfestigte Schicht 30 mechanisch (beispielsweise durch Fräsen oder Bohren) oder durch einen Laser bearbeitet. Durch diese Bearbeitung erhält die isolierende Komponente 8 bereits angenähert ihre endgültige Form (d.h. auch bzgl. ihrer Längenausdehnung). Bei dieser Bearbeitung werden in die isolierende Komponente Durchführungen 32 für eine Zufuhr von Betriebsmitteln und Durchbrüche 34 für eine Positionierung von Elektrolyt-Elektroden-Einheiten eingearbeitet. Die Verarbeitung zur isolierenden Komponente 8 nach dem fünften Schritt E der Verfestigung erweist sich als sehr vorteilhaft, da die bei der Verarbeitung eventuell auftretenden Mikrorisse strukturbedingt an den porösen Inhomogenitäten in der verfestigten Schicht 30 enden. Unerwünschte Rißbildungen werden somit weitgehend vermieden.

In einem siebenten Schritt G (dem letzten Schritt des Verfahrens) wird die bereits verfestigte isolierende Komponente 8 dichtgesintert, d.h. nochmals für ihren Einsatz ausgehärtet. Die Dichtsinterung erfolgt vorzugsweise bei einer Temperatur T₄ zwischen 1500 und 1800 °C für eine Zeitdauer t₄ von angenähert 60 Stunden.

Nach erfolgter Dichtsinterung weist die isolierende Komponente 8 ihre endgültige Form auf. Veränderungen in der Längenausdehnung der isolierenden Komponente 8 während der Dichtsinterung können definiert im sechsten Schritt (F) berücksichtigt werden.

In einer weiteren Ausgestaltung wird ein MgO/Al₂O₃-Gemisch als keramischer Werkstoff zum Herstellen der isolierenden Komponente 8 verwendet. Besonders geeignet ist dabei eine Zusammensetzung des Gemisches, bei dem in etwa 63 Gew.-% Magnesiumoxid (MgO) und 37 Gew.-% Aluminiumoxid (Al₂O₃) gewählt werden.

Gemäß dem in FIG 2 dargestellten Ausschnitt aus einer Hochtemperatur-Brennstoffzelle 10, ist die isolierende Komponente 8 zwischen den beiden zusammenzufügenden Verbundleiterplatten 12,14 angeordnet. Die Durchführungen 32 und die Durchbrüche 34 der isolierenden Komponente 8 aus FIG 1 sind nicht sichtbar. Die nach dem in FIG 1 dargestellten Verfahren hergestellte isolierende Komponente 8 ist über die glasartigen Schichten 36,38 an die Verbundleiterplatten 12 und 14 angekoppelt.

Die Verbundleiterplatten 12,14 enthalten eine Chrombasislegierung und die isolierende Komponente 8 besteht aus dem Spinell. Durch die glasartigen Schichten 36,38 wird die isolierende Schicht 8 mit den Verbundleiterplatten 12,14 stoffschlüssig und gasisolierend verbunden. Die glasartigen Schichten 36,38 bestehen vorzugsweise aus einem alkalifreien Glaslot.

In Abhängigkeit von dem gewünschten Abstand zwischen den beiden Verbundleiterplatten 12,14 kann die isolierende Komponente 8 nach dem in FIG 1 dargestellten Verfahren in der vorgegebenen Dicke hergestellt werden. Das Verfahren ist somit besonders für die Herstellung von Hochtemperatur-Brennstoffzellen geeignet.

## Patentansprüche

1. Verfahren zum Herstellen einer isolierenden Komponente (8) aus einem keramischen Werkstoff für eine Hochtemperatur-Brennstoffzelle (10) mit folgenden Schritten:
- In einem ersten Schritt (A) wird ein keramischer Werkstoff durch Naßaufbereiten mit einem wasserlöslichen Bindemittel in eine Dispersion umgesetzt,
- in einem zweiten Schritt (B) wird die Dispersion zu einer wasserhaltigen Schicht (20) vergossen,
- in einem dritten Schritt (C) wird die wasserhaltige Schicht (20) bei erhöhter Temperatur zu einer gummiartigen Schicht (26) umgesetzt,
- in einem vierten Schritt (D) wird das Bindemittel bei erhöhter Temperatur aus der gummiartigen Schicht (26) ausgebrannt,
- in einem fünften Schritt (E) wird die ausgebrannte Schicht (28) bei erhöhter Temperatur verfestigt,
- in einem sechsten und siebten Schritt (F,G) wird die verfestigte Schicht (30) entsprechend den Abmessungen der isolierenden Komponente (8) bearbeitet und dichtgesintert.

2. Verfahren nach Anspruch 1,
**gekennzeichnet durch** eine Dicke d zwischen 500 und 800 µm für die wasserhaltige Schicht (20).

3. Verfahren nach Anspruch 1 oder 2,
**dadurch gekennzeichnet, daß** die Dispersion im zweiten Schritt (B) in einer Form vergossen wird.

4. Verfahren nach einem der Ansprüche 1 bis 3,
**dadurch gekennzeichnet, daß** im dritten Schritt (C) die Umsetzung bei einer Temperatur T₁ zwischen 80 und 140 °C durchgeführt wird.

5. Verfahren nach einem der vorhergehenden Ansprüche,
**gekennzeichnet durch** eine Zeitdauer t₁ zwischen 2 und 10 Stunden für den dritten Schritt (C).

6. Verfahren nach einem der vorhergehenden Ansprüche,
**dadurch gekennzeichnet, daß** im vierten Schritt (D) des Bindemittels bei einer Temperatur T₂ zwischen 200 und 600 °C ausgebrannt wird.

7. Verfahren nach einem der vorhergehenden Ansprüche,
**gekennzeichnet durch** eine Zeitdauer t₂ zwischen 1 und 4 Stunden für den vierten Schritt (D).

8. Verfahren nach einem der vorhergehenden Ansprüche,
**dadurch gekennzeichnet, daß** im fünften Schritt (E) die Verfestigung bei einer Temperatur T₃ zwischen 1400 und 1600 °C durchgeführt wird.

9. Verfahren nach einem der vorhergehenden Ansprüche,
**gekennzeichnet durch** eine Zeitdauer t₃ von höchstens 60 Stunden für den fünften Schritt (E).

10. Verfahren nach einem der vorhergehenden Ansprüche,
**dadurch gekennzeichnet, daß** im siebenten Schritt (G) die Dichtsinterung bei einer Temperatur T₄ zwischen 1500 und 1800 °C durchgeführt wird.

11. Verfahren nach einem der vorhergehenden Ansprüche,
**gekennzeichnet durch** eine Zeitdauer t₄ von höchstens 60 Stunden für den siebenten Schritt (G).

12. Hochtemperatur-Brennstoffzelle (10) mit einer nach einem der Ansprüche 1 bis 11 hergestellten isolierenden Komponente (8).

## Claims

1. A process for producing an insulating component (8) from a ceramic material for a high-temperature fuel cell (10), involving the following steps:
- in a first step (A) a ceramic material is converted into a dispersion by wet preparation with a watersoluble binding agent,
- in a second step (B) the dispersion is poured to form a water-containing layer (20),
- in a third step (C) the water-containing layer (20) is converted at elevated temperature into a rubbery layer (26),
- in a fourth step (D) the binding agent is burnt out of the rubbery layer (26) at elevated temperature,
- in a fifth step (E) the burnt-out layer (28) is consolidated at elevated temperature,
- in a sixth and a seventh step (F, G) the consolidated layer (30) is worked and subjected to densification by sintering so as to correspond to the dimensions of the insulating component (8).

2. Process according to Claim 1,
**characterised by** a thickness *d* of between 500 and 800 *µ*m for the water-containing layer (20).

3. Process according to Claim 1 or 2,
**characterised in that** in the second step (B) the dispersion is poured into a mould.

4. Process according to one of Claims 1 to 3,
**characterised in that** in the third step (C) the conversion is carried out at a temperature T₁ of between So and 140 °C.

5. Process according to one of the preceding claims,
**characterised by** a duration t₁ of between 2 and 10 hours for the third step (C).

6. Process according to one of the preceding claims,
**characterised in that** in the fourth step (D) of the binding agent is burnt off at a temperature T₂ of between 200 and 600 °C.

7. Process according to one of the preceding claims,
**characterised by** a duration t₂ of between 1 and 4 hours for the fourth step (D).

8. Process according to one of the preceding claims,
**characterised in that** in the fifth step (E) the consolidation is carried out at a temperature T₃ of between 1,400 and 1,600 °C.

9. Process according to one of the preceding claims,
**characterised by** a duration t₃ of at most 60 hours for the fifth step (E).

10. Process according to one of the preceding claims,
**characterised in that** in the seventh step (G) the densification by sintering is carried out at a temperature T₄ of between 1,500 and 1,800 °C.

11. Process according to one of the preceding claims,
**characterised by** a duration t₄ of at most 60 hours for the seventh step (G).

12. A high-temperature fuel cell (10) having an insulating component (8) produced in accordance with one of Claims 1 to 11.

## Revendications

1. Procédé de fabrication d'un élément constitutif (8) isolant en un matériau céramique pour une pile (10) à combustible à haute température comprenant les stades suivants :
- dans un premier stade (A), on transforme un matériau céramique par traitement en voie humide par un liant soluble dans l'eau en une dispersion,
- dans un deuxième stade (B), on coule la dispersion en une couche (20) aqueuse,
- dans un troisième stade (C), on transforme la couche (20) aqueuse à haute température en une couche du type caoutchouc,
- dans un quatrième stade (D), on élimine le liant de la couche (26) du type caoutchouc à haute température par combustion,
- dans un cinquième stade (E), on consolide la couche (28) ayant subi la combustion à haute température,
- dans un sixième et dans un septième stade (F, G), on traite et on fritte à la densité maximale la couche (30) solidifiée en fonction des dimensions de l'élément constitutif (8) isolant.

2. Procédé suivant la revendication 1, **caractérisé par** une épaisseur d comprise entre 500 et 800 µm pour la couche (20) aqueuse.

3. Procédé suivant la revendication 1 ou 2, **caractérisé en ce que** l'on coule la dispersion dans un moule au deuxième stade (B).

4. Procédé suivant l'une des revendications 1 à 3, **caractérisé en ce que** l'on effectue au troisième stade (C) la transformation à une température T₁ comprise entre 80 et 140°C.

5. Procédé suivant l'une des revendications précédentes, **caractérisé par** une durée t₁ comprise entre 2 et 10 heures pour le troisième stade (C).

6. Procédé suivant l'une des revendications précédentes, **caractérisé en ce que**, au quatrième stade (D), l'on fait subir au liant une combustion à une température T₂ comprise entre 200 et 600°C.

7. Procédé suivant l'une des revendications précédentes, **caractérisé par** une durée t₂ comprise entre 1 et 4 heures pour le quatrième stade (D).

8. Procédé suivant l'une des revendications précédentes, **caractérisé en ce que** l'on effectue au cinquième stade (E) la consolidation à une température T₃ comprise entre 1400 et 1600°C.

9. Procédé suivant l'une des revendications précédentes, **caractérisé par** une durée t₃ de 60 heures au plus pour le cinquième stade (E).

10. Procédé suivant l'une des revendications précédentes, **caractérisé en ce que** l'on effectue au septième stade (G) le frittage à la densité maximale à une température T₄ comprise entre 1500 et 1800°C.

11. Procédé suivant l'une des revendications précédentes, **caractérisé par** une durée t₄ de 60 heures au plus pour le septième stade (G).

12. Pile (10) à combustible à haute température ayant un élément constitutif (8) isolant préparé suivant l'une des revendications 1 à 11.
